# EUROPEAN PATENT APPLICATION

(11) **EP 1 009 051 A2**
(43) Date of publication of application: **14.06.2000**
(21) Application number: 99115250.5
(22) Date of filing: 02.08.1999
(51) Int. Cl.: H01M 8/02

(54) **Liquid cooled bipolar plate consisting of glued plates for PEM fuel cells**

(30) Priority: 08.12.1998 US 207749
(71) Applicant: GENERAL MOTORS CORPORATION, Detroit Michigan 48202 (US)
(72) Inventor: Fuss, Robert Lee, Spencerport, New York 14559 (US)
(74) Representative: Manitz, Finsterwald & Partner

(57) **Abstract**

A liquid cooled bipolar plate for a PEM fuel cell comprising first and second corrosion-resistant sheets glued to each other by means of an electrically-conductive adhesive comprising corrosion-resistant conductive particles dispersed throughout a polymeric matrix and having a resistivity no greater than about 1 ohm-cm.

## Description

The Government of the United States of America has rights in this invention pursuant to Contract Number DE-AC02-90CH10435 awarded by the United States Department of Energy.

### TECHNICAL FIELD

This invention relates to PEM fuel cell stacks, and more particularly to bipolar plates for separating one cell from the next in such stacks.

### BACKGROUND OF THE INVENTION

PEM (i.e., proton exchange membrane) cells are well known in the art and include in each cell thereof a so-called "membrane-electrode-assembly" (hereafter MEA) comprising a thin, proton-conductive, polymer, membrane-electrolyte having an anode electrode film formed on one face thereof and a cathode electrode film formed on the opposite face thereof. Such membrane-electrolytes are well known in the art and are described in such U.S. Patents as 5,272,017 and 3,134,697, as well as in the Journal of Power Sources, Volume 29 (1990) pages 367-387, *inter alia.* In general, such membrane-electrolytes are made from ion exchange resins, and typically comprise a perflourinated sulfonic acid polymer such as NAFION™ available from the E.I. DuPont. The anode and cathode films, on the other hand, typically comprise (1) finely divided carbon particles, very finely divided catalytic particles supported on the internal and external surfaces of the carbon particles, and proton-conductive material (e.g., NAFION™) intermingled with the catalytic and carbon particles, or (2) catalytic particles dispersed throughout a polytetrafluroethylene (PTFE) binder. One such membrane-electrode-assembly and fuel cell is described in U.S. Patent 5,272,017 issued December 21, 1993 and assigned to the assignee of the present invention.

The MEA for each cell is sandwiched between a pair of electrically conductive elements which serve as current collectors for the anode/cathode. The elements typically contain an array of grooves in the faces thereof for distributing the fuel cell's gaseous reactants (e.g., H₂ and O₂/air) over the surfaces of the respective anode and cathode. In a fuel cell stack, a plurality of the cells are stacked together in electrical series while being separated one from the next by an impermeable, electrically conductive, bipolar plate. The bipolar plate serves as an electrically conductive separator element between two adjacent cells, and (1) typically has reactant gas distributing grooves on both external faces thereof, (2) conducts electrical current between the anode of one cell and the cathode of the next adjacent cell in the stack, and (3) has internal passages therein through which coolant flows to remove heat from the stack.

The PEM fuel cell environment is highly corrosive, and accordingly, the bipolar plates and the materials used to assemble them must be both corrosion resistant and electrically conductive. Bipolar plates are often fabricated from graphite which is lightweight, corrosion resistant and electrically conductive in the PEM fuel cell environment. Bipolar plates have also been made from sheets of corrosion-resistant metal, or from sheets of corrosion-susceptible metals (e.g. Al) which have been provided (e.g., coated or clad) with a corrosion-resistant outer layer. Particularly effective corrosion-resistant metals include Ti, Cr, stainless steel, *inter alia.*

Metal bipolar plates have been assembled by clamping the individual plates tightly together and by brazing (i.e., with metal plates). The present invention is a simpler, less costly alternative to clamping and brazing that can be used with all types of bipolar plate materials, not just metals.

### SUMMARY OF THE INVENTION

The present invention contemplates making a bipolar plate for a PEM fuel cell by gluing a pair of corrosion-resistant, electrically conductive sheets together (i.e., directly to each other, or via an intermediate sheet) with an electrically conductive adhesive comprising a plurality of corrosion resistant, conductive particles (i.e., about 10-50 microns) dispersed throughout a polymeric matrix and having a resistivity no greater than about one (1) ohm-cm. Preferably, the conductive particles are selected from the group consisting of silver, gold, nickel, platinum, titanium, graphite, carbon, nickel plated graphite and nickel plated carbon, and comprise about 20% to about 40%, by volume, of the adhesive. The polymer matrix is preferably selected from the group consisting of epoxies, urethanes, acrylics, phenolics, silicones, polyvinal acetate, acetal and other suitable thermoplastics and thermosets.

More specifically, the present invention relates to a liquid-cooled, bipolar plate (1) for separating adjacent cells of a PEM fuel cell stack, (2) for conducting electric current between adjacent cells of the stack and (3) for cooling the stack. The plate may also serve to distribute H₂ and air/O₂ to the cells. In one embodiment, the plate comprises a first electrically conductive corrosion-resistant sheet having (1) an external anode-confronting face including a plurality of lands defining a plurality of grooves for distributing hydrogen to the first cell, and (2) an internal first heat exchange face inside the plate for contacting a liquid coolant flowing through the plate. The plate further comprises a second, electrically conductive corrosion-resistant sheet having (1) an external cathode-confronting face comprising a plurality of lands defining a plurality of grooves for distributing air/oxygen to the second cell, and (2) an internal second heat exchange face inside the plate for contacting the coolant flowing through the plate. The heat exchange faces of the first and second sheet (1) confront each other so as to define therebetween a coolant flow passage adapted to receive a liquid coolant, and (2) are electrically coupled to each other at a plurality of joints via the electrically-conductive adhesive described above. While the first and second sheets may be glued directly to each other, they may alternatively be glued to a discrete intermediate, separator conductive sheet that partitions the coolant flow passage. The intermediate separator sheet may be perforated so as to permit coolant to move between the smaller coolant flow passages. The separator sheet may be corrugated to provide a plurality of coolant channels in the coolant flow passage, or may be a flat sheet joined to first and second outer sheets which each have a plurality of coolant flow channels formed therein, as for example by corrugating the outer sheets. The corrosion-resistant sheets will preferably comprise corrosion-proofed aluminum (e.g., Ti-clad aluminum), conductive plastic, and corrosion-resistant metals such as titanium, silver, gold, platinum, stainless steel, nickel, chromium, or alloys thereof, etc. All mutually contacting sites of the exterior sheets (and interior separator sheet when used) are glued together to insure that the coolant passage is completely sealed against coolant leakage and to provide low resistance electrical conduction between adjacent cells. The electrically conductive adhesive also serves as a conductive filler for filling any gaps between the sheets resulting from irregularities in the sheets.

### BRIEF DESCRIPTION OF THE DRAWINGS

The invention will better be understood when considered in the light of the following detailed description of certain specific embodiments thereof which is given hereafter in conjunction with the several figures in which:
Figure 1 is a schematic, isometric, exploded illustration of a liquid-cooled PEM fuel cell stack;
Figure 2A is an isometric, exploded view of a bipolar plate useful with PEM fuel cell stacks like that illustrated in Figure 1;
Figure 2B is a section view in the direction 2B-2B of Figure 2A;
Figure 2C is a magnified, broken away view 2C of Figure 2A;
Figure 3 is a sectioned view in the direction 3-3 of Figure 2A;
Figure 4 is a magnified portion of the bipolar plate of Figure 3;
Figure 5 is a view like that of Figure 4, but of a different embodiment of the present invention; and
Figure 6 is a view like that of Figure 3, but of still another embodiment of the present invention.

### DETAILED DESCRIPTION OF THE INVENTION

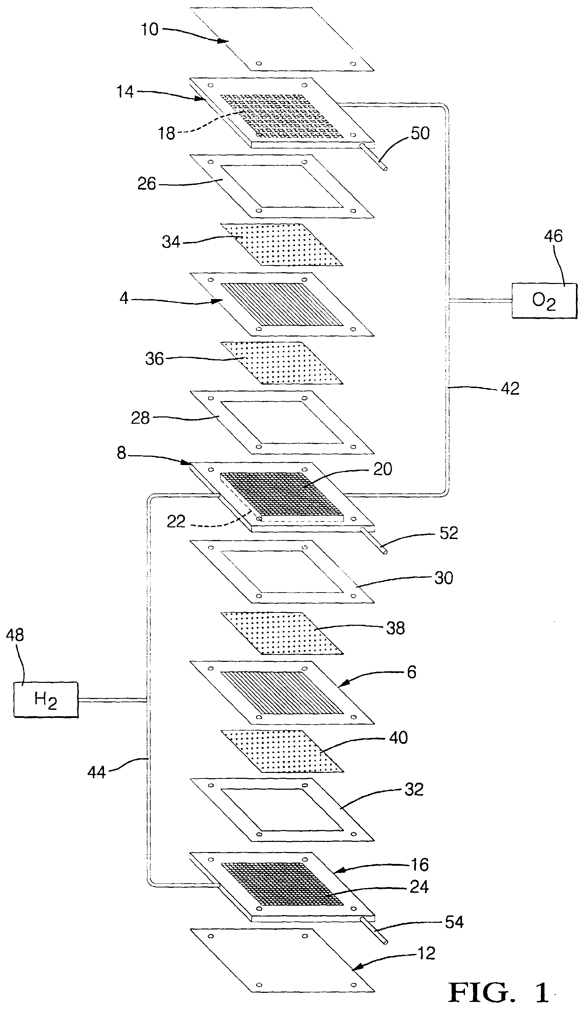

Figure 1 depicts a two cell, bipolar PEM fuel cell stack having a pair of membrane-electrode-assemblies (MEAs) 4 and 6 separated from each other by an electrically conductive, liquid-cooled, bipolar plate 8. The MEAs 4 and 6, and bipolar plate 8, are stacked together between stainless steel clamping plates 10 and 12, and end contact elements 14 and 16. The end contact elements 14 and 16, as well as the bipolar plate 8, contain a plurality of grooves and openings 18, 20, 22, and 24 for distributing fuel and oxidant gases (i.e., H₂ & O₂) to the MEAs 4 and 6. Nonconductive gaskets 26, 28, 30, and 32 provide seals and electrical insulation between the several components of the fuel cell stack. Gas permeable carbon/graphite diffusion papers 34, 36, 38 and 40 press up against the electrode faces of the MEAs 4 and 6. The end contact elements 14 and 16 press up against the carbon/graphite papers 34 and 40 respectively, while the bipolar plate 8 presses up against the carbon/graphite paper 36 on the anode face of MEA 4, and against carbon/graphite paper 38 on the cathode face of MEA 6. Oxygen is supplied to the cathode side of the fuel cell stack from storage tank 46 via appropriate supply plumbing 42, while hydrogen is supplied to the anode side of the fuel cell from storage tank 48, via appropriate supply plumbing 44. Alternatively, air may be supplied to the cathode side from the ambient and hydrogen to the anode from a methanol or gasoline reformer or the like. Exhaust plumbing (not shown) for both the H₂ and O₂/air sides of the MEAs will also be provided. Additional plumbing 50, 52 and 54 is provided for supplying liquid coolant to the bipolar plate 8 and end plates 14 and 16. Appropriate plumbing for exhausting coolant from the plate 8 and end plates 14 and 16 is also provided, but not shown.

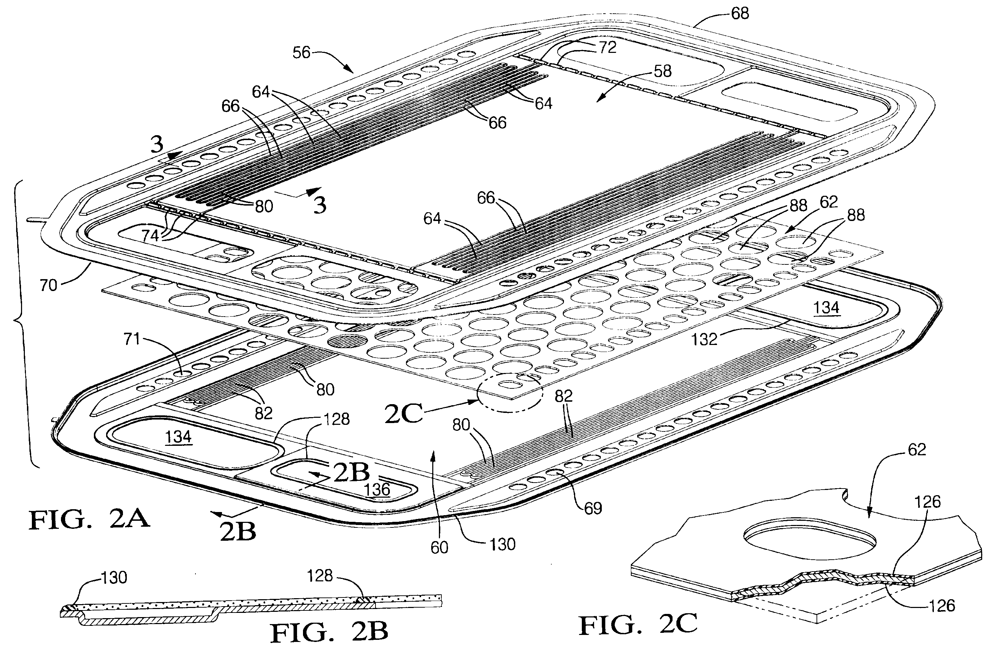

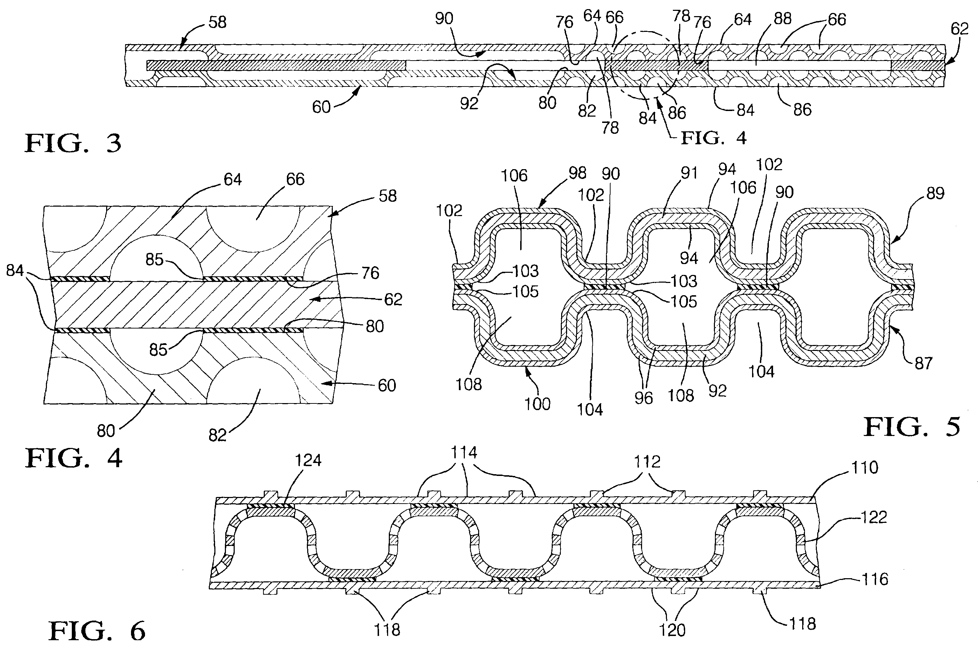

Figure 2A is an isometric, exploded view of a bipolar plate 56 comprising a first exterior metal sheet 58, a second exterior metal sheet 60, and an interior spacer metal sheet 62 interjacent the first metal sheet 58 and the second metal sheet 60. The exterior metal sheets 58 and 60 are made as thin as possible (e.g., about 0.002 - 0.02 inches thick), and may be formed by stamping, by photo etching (i.e., through a photolithographic mask) or any other conventional process for shaping sheet metal. The external sheets 58 and 60 are formed so as to provide a plurality of lands 64 which define therebetween a plurality of grooves 66 through which the fuel cell's reactant gases (i.e., H₂ or O₂) flow in a tortuous path from one side 68 of the bipolar plate to the other side 70 thereof. When the fuel cell is fully assembled, the lands 64 press against the carbon/graphite papers 36 or 38 (see Figure 1) which, in turn, press against the MEAs 4 and 6 respectively. For drafting simplicity, Figure 2A depicts only two arrays of lands and grooves. In reality, the lands and grooves will cover the entire external faces of the metal sheets 58 and 60 that engage the carbon/graphite papers 36 and 38. The reactant gas is supplied to grooves 66 from a header or manifold groove 72 that lies along one side 68 of the fuel cell, and exits the grooves 66 via another header/manifold groove 74 that lies adjacent the opposite side 70 of the fuel cell. As best shown in Figure 3, the underside of the sheet 58 includes a plurality of ridges 76 which define therebetween a plurality of channels 78 through which coolant passes during the operation of the fuel cell. As shown in Figure 3, a coolant channel 78 underlies each land 64 while a reactant gas groove 66 underlies each ridge 76.

Metal sheet 60 is similar to sheet 58. The internal (i.e., coolant side) of sheet 60 is shown in Figure 2. In this regard, there is depicted a plurality of ridges 80 defining therebetween a plurality of channels 82 through which coolant flows from one side 69 of the bipolar plate to the other 71. Like sheet 58 and as best shown in Figure 3, the external side of the sheet 60 will have a plurality of lands 84 thereon defining a plurality of grooves 86 through which the reactant gases pass. An interior metal spacer sheet 62 is positioned interjacent the exterior sheets 58 and 60 and includes a plurality of apertures 88 therein to permit coolant to flow between the channels 82 in sheet 60 and the channels 78 in the sheet 58 thereby breaking laminar boundary layers and affording turbulence, and hence more effective heat exchange with the inside faces 90 and 92 of the exterior sheets 58 and 60 respectively.

Figure 4 is a magnified view of a portion of Figure 3 and shows the ridges 76 on the first sheet 58, and the ridges 80 on the second sheet 60 glued to the spacer sheet 62 by corrosion-resistant, electrically conductive adhesive 85, which will be discussed in more detail hereinafter. In the embodiments shown in Figures 2-4, the exterior sheets 58 and 60 and spacer sheet 62 are made entirely of a corrosion-resistant metal (e.g., titanium) but other electrically conductive, corrosion resistant materials (e.g., carbon or graphite) may also be used.

Figure 5 depicts an alternative embodiment of the present invention. More specifically, Figure 5 depicts a first metal sheet 89 glued directly (i.e., without an intermediate spacer sheet) to a second metal sheet 87 via a plurality of conductive joints 90. The sheets 89 and 87 are themselves composites which comprise a substrate metal 91 and 92 having an outer layer (e.g., a cladding or coating) 94 and 96 respectively thereon. The substrate metal 91, 92 may be a corrosion-susceptible metal such as aluminum, while the outer coating/cladding 94, 96 will comprise a conductive, corrosion-resistant material (e.g., titanium, stainless steel, chromium, titanium nitride, carbon etc.). In this embodiment, the clad/coated metal sheets 86 and 88 are corrugated, as by stamping, so as to provide lands 98 and 100, which define a plurality of grooves 102 and 104 for distributing the reactant gases across the faces of the MEAs. Corrugating also provides a plurality of ridges 103 and 105 which, in turn, define a plurality of channels 106 and 108 through which coolant flows.

Figure 6 is still another embodiment of the present invention. Figure 6 depicts a first corrosion-resistant exterior metal sheet 110 having a plurality of lands 112 thereon defining a plurality of grooves 114 thereon through which a reactant gas is distributed across the face of the MEA associated therewith. Similarly, a second corrosion-resistant metal sheet 116 has a plurality of lands 118 defining a plurality of grooves 120 for distributing reactant gas across the MEA associated therewith. The first and second sheets 110 and 116 are separated from each other by a corrugated perforated metal separator sheet 122 which is glued to the first and second sheets 110 and 116 at the several conductive adhesive joints 124.

In accordance with the present invention, the several sheets are glued together at a plurality of oxide-free sites via a corrosion-resistant, electrically-conductive adhesive. Electrically-conductive adhesive, *per se*, are known in the art and are commercially available. As part of the present invention, all oxides are removed from the surfaces of metal sheets at the sites where gluing is to occur in order to create as low resistance electrical connection as is possible between the sheets and the adhesive. Nonmetallic sheets (e.g., graphite) do not require oxide removal. The adhesive, like the sheets themselves, is substantially insoluble in the coolant flowing between the sheets 58 and 60 in that the particles therein will not dissolve and contribute metallic ions to the coolant which causes the otherwise substantially dielectric (i.e., resistivity greater than about 200,000 ohm-cm) coolant to become inordinately conductive. When the coolant becomes conductive, stray currents flow through out the stack via the coolant and short circuiting, galvanic corrosion and coolant electrolysis can occur. Filler metal particles are considered to be substantially insoluble if their solubility in the coolant, over time, does not cause the coolant's resistivity to drop below about 200,000 ohm-cm. Hence when water is used as the coolant metals such as copper, aluminum, tin, zinc and lead ale to be avoided, or completely encapsulated in the adhesive resin.

To effect gluing in accordance with the present invention, metal sheets are cleaned (e.g., by abrading and/or chemically etching) to remove all surface oxides and other contaminants from the sites where adhesive is to be applied. In the embodiment shown in Figure 2A and Figure 2C, conductive adhesive 126 is applied to both faces of the spacer sheet 62, while beads 128, 130 and 132 of sealant are applied around the perimeter of the sheets 58 and 60, and around the openings 134, 136 and 183 which form H₂ and air manifolds for the stack. The sealant 128, 130, and 132 may be electrically conductive, but need not be, and serves to keep coolant from leaking into the reactants (and vice versa) or to the outside of the stack. Suitable nonconductive sealants include moisture-cured silicones (e.g., LOCTITE™ 5900) or catalyzed two-part urethanes (e.g., URALANE^{™} 5773) which are high elongation, low modulus materials highly resistant to deionized water, hydrogen and mild acids up to 150°C. The sealants are applied as beads sufficiently thick (e.g., about 1-2 mm) to fill gaps ranging from about 0.05 mm to about 0.25 mm. The conductive adhesive 126 may be brushed, dabbed, sprayed or rolled onto the sheets, but confined to sites where gluing is to occur. Preferably, a mask is first applied to the sheets with openings therein at the sites where gluing is to occur. The glue is then applied through the openings in the mask. The conductive adhesive is applied to a thickness of about 0.001 to about 0.002 inches. The sheets are sandwiched together in a suitable fixture that applies uniform pressure across the sheets, and then heated in a hot press to cure the polymer matrix material. The precise curing temperature and time will vary depending on the chemical composition of the polymer matrix material. The conductive adhesive may also be used to coat the entire heat exchange faces to provide corrosion protection therefor.

In accordance with a preferred embodiment of the present invention, the exterior and separator sheets comprise Grade 2 titanium, and the conductive adhesive comprises (1) about 20% to about 40%, by volume, conductive filler particles having a particle size varying between about 10 microns to about 50 microns, and (2) a polymer matrix comprising a thermally cured one-part epoxy. Alternatively, a catalyzed epoxy could be used as the matrix. A particularly suitable material comprises about 25 %, by volume, graphite filler particles in an epoxy polymer matrix, and is preferred over the more expensive nobel metal filled polymers. An alternative adhesive comprises about 30%, by volume, silver particles in an epoxy polymer matrix and is commercially available under the trade name Master Bond Polymer System Supreme 10 HTS sold by Master Bond, Inc. of Hachensak, N. J. In general, the adhesive will be highly resistant to hydrogen and mild acids (HF @ pH 3-4), and inert to (i.e., release no ions) to solvents such as deionized water, ethylene glycol and methanol at 100°C.

Prior to gluing, the titanium sheets are chemically cleaned by (1) degreasing with methyl-ethyl-ketone, and (2) pickeling for 2 - 5 minutes in a solution comprising (a) 40% nitric acid, (b) 2% - 5 % hydrofluoric acid, (c) 4 grams/gallon of ammonium biflouride, and water. Alternatively, the sheets may be physically cleaned by abrading the surfaces with 100 to 220 grit abrasive followed by cleaning and degreasing with acetone. For the one-part epoxy system, the assembly is hot pressed for about 60 minutes at a temperature of about 150°C. For the catalyzed epoxy system the assembly is pressed for about 30 minutes at a temperature of about 25°C.

Electrical resistance measurements were conducted on a number of glued titanium prototype bipolar plates. The plates were abraded using 100 grit abrasive to remove oxides followed by acetone cleaning and degreasing. Plates were then assembled using: (1) Master Bond 10 HTS silver-epoxy conductive adhesive; and (2) a prototype graphite-epoxy conductive adhesive. A similar set of plates were assembled with the graphite-epoxy, but without abrading with the 100 grit abrasive. The bipolar plates were then assembled into a simulated fuel cell complete with all the essential components thereof except the MEA. 80°C water was circulated for 120 hours through the coolant channels in the bipolar plates to simulate normal operating conditions and to permit evaluation of any degradation of the adhesives due to exposure to the water. Electrical current ranging from 50 to 500 amps was passed through the assembly, and voltage drops across the bond lines (i.e., where the adhesive was applied) of the bipolar plates was measured, both before and after the hot water circulation. The results of those tests are shown in Table I.

**TABLE I**

| Current (AMPS) | Voltage Drop (millivolts) Across Bond Line | | | | | |
|---|---|---|---|---|---|---|
| | Silver-Epoxy | | Graphite-Epoxy | | Unabraded Graphite-Epoxy | |
| | After | Before | After | Before | After | Before |
| 50 | | | | | | |
| | < .01 | < .01 | .02 | < .01 | .59 | .29 |
| 100 | < .01 | < .01 | .05 | < .01 | 1.16 | .47 |
| 300 | .01 | < .01 | .15 | .01 | 3.46 | 1.46 |
| 500 | .03 | < .01 | .27 | .01 | 5.70 | 2.32 |

These data show that plates assembled without removing the oxide layer on the surface have unacceptable resistance both initially and after exposure to the heated water.

The initial condition of both the silver-epoxy and graphite-epoxy adhesives (i.e., with oxide removal) showed resistances well within acceptable levels (i.e., less than about 1 ohm-cm). Likewise, while the resistance of the silver-epoxy and graphite-epoxy did rise when exposed to the hot water, their resistances are still well within the acceptable levels for this application.

While the invention has been described in terms of certain specific embodiments thereof it is not intended to be limited thereto but rather only to the extent set forth hereafter in the claims which follow.

## Claims

1. A liquid-cooled, bipolar plate for separating adjacent first and second cells of a PEM fuel cell and for conducting electric current between said cells, said plate comprising: (1) a first corrosion-resistant sheet having an anode-confronting face and a first heat exchange face; (2) a second corrosion-resistant sheet having a cathode-confronting face and a second heat exchange face; and (3) said first and second heat exchange faces (a) confronting each other so as to define therebetween a coolant flow passage adapted to receive a liquid coolant, and (b) being electrically coupled to each other at a plurality of sites via an electrically conductive adhesive comprising a plurality of corrosion-resistant conductive particles dispersed throughout a polymeric matrix and having a resistivity no greater than about 1 ohm-cm.

2. A plate according to claim 1 wherein said first and second sheets are bonded directly to each other by said adhesive.

3. A plate according to claim 1 wherein said first and second sheets are separated from each other by a separator sheet which is bonded to said first and second sheets by said adhesive.

4. A plate according to claim 3 wherein said separator sheet partitions said coolant flow passage into a plurality of flow channels.

5. A plate according to claim 4 wherein said separator sheet is perforated to permit said coolant to move back and forth between flow channels on opposite sides of said separator sheet.

6. A bipolar plate according to clam 1 wherein said particles are selected from the group consisting of silver, gold, nickel, platinum, graphite, carbon, nickel plated graphite and nickel plated carbon.

7. A bipolar plate according to claim 1 wherein said polymeric matrix is selected from the group consisting of epoxies, acrylics, phenolics, silicones, polyvinal acetate and acetals.

8. A liquid-cooled, bipolar plate for separating adjacent first and second cells of a PEM fuel cell and for conducting electric current between said cells, said plate comprising: (1) a first corrosion-resistant sheet having a hydrogen-confronting face comprising a plurality of first lands defining a plurality of first grooves for distributing hydrogen to said first cell, and a first heat exchange face comprising a plurality of ridges defining a plurality of first channels for flowing a liquid coolant across said first heat exchange face; (2) a second corrosion-resistant sheet having an oxygen-confronting face comprising a plurality of second lands defining a plurality of second grooves for distributing oxygen to said second cell, and a second heat exchange face comprising a plurality of second ridges defining a plurality of second channels for flowing said coolant across said second heat exchange face; and (3) said first and second heat exchange faces confronting each other and being electrically coupled to each other at a plurality of sites on said ridges via an electrically conductive adhesive comprising a plurality of conductive particles dispersed throughout a polymeric matrix and having a resistivity no greater than about 1 ohm-cm.

9. A plate according to claim 8 wherein said ridges of said first and second sheets are bonded directly to each other by said adhesive.

10. A plate according to claim 8 wherein said first and second sheets are separated from each other by a separator sheet which is bonded to said first and second sheets by said adhesive.

11. A plate according to claim 8 wherein said first and second sheets comprise a material selected from the group consisting of metals, carbon, graphite and polymer-bonded carbon or graphite.
